(19) **Europäisches Patentamt / European Patent Office / Office européen des brevets**

(11) **EP 1 716 579 B1**

(12) **EUROPEAN PATENT SPECIFICATION**

(45) Date of publication and mention of the grant of the patent:
**25.03.2009 Bulletin 2009/13**

(51) Int Cl.:
***H01B 1/24*** *(2006.01)*    ***C08L 23/14*** *(2006.01)*
***C08L 23/16*** *(2006.01)*

(21) Application number: **05704944.7**

(22) Date of filing: **04.01.2005**

(86) International application number:
**PCT/US2005/000110**

(87) International publication number:
**WO 2005/083721 (09.09.2005 Gazette 2005/36)**

(54) **ELECTRICALLY-DISSIPATIVE PROPYLENE POLYMER COMPOSITION**

ELEKTRISCH DISSIPATIVE PROPYLEN-POLYMERZUSAMMENSETZUNG

COMPOSITION DE POLYMERE DE PROPYLENE DISSIPANT L'ENERGIE ELECTRIQUE

(84) Designated Contracting States:
**AT BE BG CH CY CZ DE DK EE ES FI FR GB GR HU IE IS IT LI LT LU MC NL PL PT RO SE SI SK TR**

(30) Priority: **10.02.2004 US 543223 P**

(43) Date of publication of application:
**02.11.2006 Bulletin 2006/44**

(73) Proprietor: **DOW GLOBAL TECHNOLOGIES INC.**
**Midland MI 48674 (US)**

(72) Inventors:
- **NOVAK,Leo, R.**
**Lake Jackson, TX 77566 (US)**
- **LEWIS, Ray, A.**
**Midland, MI 48642 (US)**

(74) Representative: **Hayes, Adrian Chetwynd**
**Boult Wade Tennant,**
**Verulam Gardens**
**70 Gray's Inn Road**
**London WC1X 8BT (GB)**

(56) References cited:
**US-A- 4 504 617**      **US-A- 5 468 808**
**US-A- 5 484 838**

- **PATENT ABSTRACTS OF JAPAN vol. 2003, no. 01, 14 January 2003 (2003-01-14) & JP 2002 275342 A (MITSUI CHEMICALS INC; GRAND POLYMER CO LTD), 25 September 2002 (2002-09-25)**

**Description**

This invention relates to electrically-dissipative propylene polymer compositions. More particularly, this invention relates to electrically-dissipative propylene polymer compositions which demonstrates reduced surface imperfections, such as flow marks, in injection-molded articles.

It is known to prepare coated articles by electrostatic painting methods. In such methods, a paint or coating is charged or ionized and sprayed on a grounded, conductive article, and the electrostatic attraction between the paint or coating and the grounded article results in a more efficient painting process with less wasted paint material, and thicker and more consistent paint coverage, particularly when the article has a complex shape. When articles fabricated from metals are painted, the metal, which is inherently conductive, is easily grounded and efficiently painted. In recent years, there has been an emphasis on the use of polymeric materials, such as propylene polymers, in the manufacture of articles, particularly in applications requiring reductions in weight and improved corrosion resistance, such as automotive applications. However, polymers typically used in such processes are insufficiently conductive to efficiently obtain a satisfactory paint thickness and coverage when the article is electrostatically painted. Further, such articles are also known to exhibit surface imperfections, such as flow marks and silver streaks. Silver streaks are generally associated with an overheating phenomenon while flow mark imperfections appear to be associated with the viscosity, or flowability, of the resin.

Flow marks manifest on the surface of injected molded articles as a series of alternating high and low gloss bands or stripes, sometimes giving rise to the term tiger striping. The general trend of each band is approximately perpendicular to the direction of melt flow during injection. These marks do not perceivably affect mechanical properties of the molded article, nor are they discernible by touch. However, their presence are aesthetically unacceptable and often results in unacceptably high quality control reject rate because of the appearance of inhomogeneity within molded parts. The effect is pronounced in large molded articles with a high aspect ratio, such as automobile parts, for example, instrument panels and bumper fascia.

Methods are known for the incorporation of conductive fillers into polymers, such as impact modified propylene polymers, in order to improve their conductivity for use in electrostatic coating applications. For example, USP 5,484,838 discloses a polymer blend taught as useful in the preparation of electrostatically-paintable articles which comprises a crystalline polymer, an amorphous polymer, and electrically-conductive carbon black, wherein at least a portion of the carbon black is dispersed within the crystalline polymer. Another examples is USP 5,844,037 discloses a two phase polymer blend taught as useful in the preparation of electrostatically-paintable articles comprising an electrically-conductive carbon black, wherein the carbon black is dispersed primarily within the minor phase. However, the conductivity of articles made therefrom, the amount of carbon black necessary to provide a composition with a particular conductivity, the processing requirements for the preparation of such compositions, as well as the physical, and/or surface appearance properties of electrostatically-coated articles prepared therefrom, may be less than desirable for certain applications.

The art has attempted to improve surface appearance properties in molded articles by decreasing the viscosity of the propylene polymer resin. This technique decreased the appearance of the flow marks, however the decrease in viscosity may detrimentally effect other physical properties. Flow marks may also be decreased by annealing the article after the molding process. This annealing step however is not commercially feasible or desirable in view of the increased energy required to anneal the article, extended time to anneal, and equipment modification necessary to allow injection-molding apparati to also serve as annealing mediums. The art has also described adding low viscosity rubber components to polypropylene to improve the appearance of the resultant injection-molded or welded articles, see USP 5,468,808.

Numerous methods have been attempted either to impart conductivity or to decrease flow marks in propylene polymer compositions, however, to the inventor's knowledge, these methods have failed to produce a propylene polymer composition that is both electrically-dissipative and has reduced flow marks. Thus, there exists a need to reduce the flow marks in articles produced from electrically-dissipative propylene polymer compositions.

The present invention is such a desirable electrically-dissipative propylene polymer composition. The composition possesses a desirable balance of improved flow marks, conductivity and a good balance of stiffness and toughness. The electrically-dissipative propylene polymer composition of the present invention comprises a propylene block copolymer having a rubber, preferably an EP rubber, with a $M_z$ equal to or greater than 1,000,000; a polyolefin elastomer, preferably a substantially linear ethylene polymer or a linear ethylene polymer; an electrically-conductive carbon, preferably an electrically-conductive carbon black, carbon fiber or graphite, which is preferably present in an amount sufficient to provide a surface resistivity less than or equal to $10^{12}$ Ohms; optionally an olefinic polymer, preferably HDPE; and optionally a filler, preferably talc.

Another embodiment of the present invention is a process of extruding or molding the abovementioned electronically-dissipative propylene polymer composition into a fabricated article.

Yet another embodiment of the present invention is the abovementioned electronically-dissipative propylene polymer composition in the form of a fabricated article, preferably an automotive part, for example, a bumper, a fascia, a wheel cover, a door, an instrument panel, a trim, a cladding, a rocker panel, or a grill.

Component (a) in the electrically-dissipative propylene polymer compositions of the present invention is a propylene block copolymer. The propylene block copolymer suitable for use in this invention is well known in the literature and can be prepared by known techniques. In general, the propylene block copolymer is in the isotactic form, although other forms can also be used (for example, syndiotactic or atactic). The propylene block copolymer used for the present invention is preferably high crystalline.

The propylene block copolymer used for the present invention comprises from 99 to 30 weight percent of block (a)(i), which is a homopolymer of polypropylene; a random copolymer of propylene and an alpha-olefin, preferably a $C_2$ or $C_4$ to $C_{20}$ alpha-olefin; or combinations thereof. Block (a)(i) comprises 100 to 90 weight percent of propylene moieties and 0 to 10 weight percent of an alpha-olefin moieties.

As used herein, unless otherwise defined, molecular weight is weight average molecular weight ($M_w$). In the present invention, the propylene polymer portion, block (a)(i), preferably has a $M_w$ of equal to or greater than 100,000, more preferably of equal to or greater than 125,000, and most preferably of equal to or greater than 150,000. The propylene polymer portion preferably has a $M_w$ of equal to or less than 500,000, more preferably of equal to or less than 300,000, and most preferably of equal to or less than 250,000.

The propylene block copolymer used for the present invention comprises 70 to 1 weight percent of block (a)(ii), a rubber portion, which is a copolymer of propylene and an alpha-olefin, preferably a $C_2$ or $C_4$ to $C_{20}$ alpha-olefin; or combinations thereof. Block (a)(ii) comprises 70 to 30 weight percent of propylene moieties and 30 to 70 weight percent of an alpha-olefin moiety.

Examples of the $C_2$ and $C_4$ to $C_{20}$ alpha-olefins include 1-butene, 1-pentene, 1-hexene, 1-heptene, 1-octene, 1-decene, 1-dodecene, 1-hexadodecene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, dimethyloctene, ethyl-1-octene, methyl-1-nonene, vinylcyclopentene, vinylcyclohexene and vinylnorbornene, where alkyl branching position is not specified it is generally on position 3 or higher of the alkene. Ethylene is the preferred alpha-olefin.

Preferably the rubber portion has a $M_w$ of equal to or greater than 100,000, more preferably of equal to or greater than 150,000, and most preferably of equal to or greater than 200,000. The rubber portion preferably has a $M_w$ of equal to or less than 500,000, more preferably of equal to or less than 400,000, and most preferably of equal to or less than 300,000.

It is also desirable that the rubber portion has a high Mz. A high Mz is defined herein as a Mz of equal to or greater than 1,000,000, more preferably of equal to or greater than 1,500,000, and most preferably of equal to or greater than 2,000,000. A high $M_z$ in the rubber portion may be obtained, for example, by using low hydrogen gas in the feed, or not using any hydrogen gas at all. It is also possible to add a compound that reduces the catalyst's sensitivity to hydrogen gas, for example, an ester, to the reaction mixture upon completion of the polymerization of block (a)(i) and prior to the polymerization of block (a)(ii).

Block (a)(i) and block (a)(ii) are distinct phases. Block (a)(ii) can be dispersed in block (a)(i), block (a)(i) can be dispersed in block (a)(ii), or blocks (a)(i) and (a)(ii) can be co-continuous. Preferably, the rubber portion, block (a)(ii), is dispersed in the propylene polymer portion, block (a)(i), as distinct rubber particles. Preferably 40 percent of the rubber particles have a rubber particle size equal to or less than 0.9 microns ($\mu$m), more preferably 40 percent of the rubber particles have a rubber particle size equal to or less than 0.6 $\mu$m, even more preferably 90 percent of the rubber particles have a rubber particle size equal to or less than 0.9 $\mu$m and most preferably 90 percent of the rubber particles have a rubber particle size equal to or less than 0.6 $\mu$m. Preferably the average rubber particle size is equal to or less than 10 $\mu$m, more preferably equal to or less than 5 $\mu$m, and most preferably equal to or less than 2.5 $\mu$m.

The propylene block copolymer of the present invention can be prepared by various processes, for example, in a single stage or multiple stages, by such polymerization method as slurry polymerization, gas phase polymerization, bulk polymerization, solution polymerization or a combination thereof using a metallocene catalyst or a so-called Ziegler-Natta catalyst, which usually is one comprising a solid transition metal component comprising titanium. Particularly a catalyst consisting of, as a transition metal/solid component, a solid composition of titanium trichloride which contains as essential components titanium, magnesium and a halogen; as an organometallic component an organoaluminum compound; and if desired an electron donor. Preferred electron donors are organic compounds containing a nitrogen atom, a phosphorous atom, a sulfur atom, a silicon atom or a boron atom, and preferred are silicon compounds, ester compounds or ether compounds containing these atoms.

Propylene block copolymers are commonly made by catalytically reacting propylene in a polymerization reactor with appropriate molecular weight control agents. Nucleating agent is added after the reaction is completed in order to promote crystal formation. The polymerization catalyst should have high activity and be capable of generating highly tactic polymer. The reactor system must be capable of removing the heat of polymerization from the reaction mass, so the temperature and pressure of the reaction can be controlled appropriately.

The melt flow rate (MFR) or melt index (MI), according to ASTM D 1238 (unless otherwise noted, conditions are 230°C and an applied load of 2.16 kilogram (kg)) of the electrically-dissipative propylene polymer composition of the present invention is equal to or greater than 0.1 grams/10 minutes (g/10 min.), preferably greater than 0.5 g/10 min., more preferably greater than 1 g/10 min., and even more preferably greater than 2 g/10 min. The melt flow rate for the propylene copolymer useful herein is generally less than 100 g/10 min., preferably less than 50 g/10 min., more preferably less than 25 g/10 min., and more preferably less than 15 g/10 min.

The propylene block copolymer is present in an amount equal to or greater than 30 parts by weight, preferably equal to or greater than 35 parts by weight, more preferably equal to or greater than 40 parts by weight, and most preferably equal to or greater than 45 parts by weight based on the weight of the electrically-dissipative polymer composition. The propylene block copolymer is present in an amount equal to or less than 90 parts by weight, preferably equal to or less than 80 parts by weight, more preferably equal to or less than 70 parts by weight, and most preferably equal to or less than 65 parts by weight based on the weight of the electrically-dissipative polymer composition.

Component (b) in the compositions of this invention is a polyolefin elastomer. Suitable polyolefin elastomers comprises one or more $C_2$ to $C_{20}$ alpha-olefins in polymerized form, having a glass transition temperature ($T_g$) less than 25 °C, preferably less than 0 °C, most preferably less than -25 °C. $T_g$ is the temperature or temperature range at which a polymeric material shows an abrupt change in its physical properties, including, for example, mechanical strength. $T_g$ can be determined by differential scanning calorimetry. Examples of the types of polymers from which the present polyolefin elastomers are selected include copolymers of alpha-olefins, such as ethylene and propylene (EPR), ethylene and 1-butene (EBR), ethylene and 1-hexene or ethylene and 1-octene copolymers, and terpolymers of ethylene, propylene and a diene comonomer such as hexadiene or ethylidene norbornene (EDPM). The polyolefin elastomer is compatible, or miscible, with the rubber phase of the propylene block copolymer. The resulting combination of the polyolefin elastomer and the rubber phase comprise the elastomeric phase of the electrically-dissipative propylene polymer composition.

Preferably, the polyolefin elastomer is one or more substantially linear ethylene polymer or one or more linear ethylene polymer (S/LEP), or a mixture of one or more of each. Both substantially linear ethylene polymers and linear ethylene polymers are known. Substantially linear ethylene polymers and their method of preparation are fully described in USP 5,272,236 and USP 5,278,272. Linear ethylene polymers and their method of preparation are fully disclosed in USP 3,645,992; USP 4,937,299; USP 4,701,432; USP 4,937,301; USP 4,935,397; USP 5,055,438; EP 129,368; EP 260,999; and WO 90/07526.

As used here, "a linear ethylene polymer" means a homopolymer of ethylene or a copolymer of ethylene and one or more alpha-olefin comonomers having a linear backbone (that is, no cross linking), no long-chain branching, a narrow molecular weight distribution and, for alpha-olefin copolymers, a narrow composition distribution. Further, as used here, "a substantially linear ethylene polymer" means a homopolymer of ethylene or a copolymer of ethylene and of one or more alpha-olefin comonomers having a linear backbone, a specific and limited amount of long-chain branching, a narrow molecular weight distribution and, for alpha-olefin copolymers, a narrow composition distribution.

Short-chain branches in a linear copolymer arise from the pendent alkyl group resulting upon polymerization of intentionally added $C_3$ to $C_{20}$ alpha-olefin comonomers. Narrow composition distribution is also sometimes referred to as homogeneous short-chain branching. Narrow composition distribution and homogeneous short-chain branching refer to the fact that the alpha-olefin comonomer is randomly distributed within a given copolymer of ethylene and an alpha-olefin comonomer and virtually all of the copolymer molecules have the same ethylene to comonomer ratio. The narrowness of the composition distribution is indicated by the value of the Composition Distribution Branch Index (CDBI) or sometimes referred to as Short Chain Branch Distribution Index. CDBI is defined as the weight percent of the polymer molecules having a comonomer content within 50 percent of the median molar comonomer content. The CDBI is readily calculated, for example, by employing temperature rising elution fractionation, as described in Wild, Journal of Polymer Science, Polymer Physics Edition, Volume 20, page 441 (1982), or USP 4,798,081. The CDBI for the substantially linear ethylene copolymers and the linear ethylene copolymers in the present invention is greater than 30 percent, preferably greater than 50 percent, and more preferably greater than 90 percent.

Long-chain branches in substantially linear ethylene polymers are polymer branches other than short chain branches. Typically, long chain branches are formed by insitu generation of an oligomeric alpha-olefin via beta-hydride elimination in a growing polymer chain. The resulting species is a relatively high molecular weight vinyl terminated hydrocarbon which upon polymerization yields a large pendent alkyl group. Long-chain branching may be further defined as hydrocarbon branches to a polymer backbone having a chain length greater than n minus 2 ("n-2") carbons, where n is the number of carbons of the largest alpha-olefin comonomer intentionally added to the reactor. Preferred long-chain branches in homopolymers of ethylene or copolymers of ethylene and one or more $C_3$ to $C_{20}$ alpha-olefin comonomers have at least from 20 carbons up to more preferably the number of carbons in the polymer backbone from which the branch is pendant. Long-chain branching may be distinguished using $^{13}$C nuclear magnetic resonance spectroscopy alone, or with gel permeation chromatography-laser light scattering (GPC-LALS) or a similar analytical technique. Substantially linear ethylene polymers contain at least 0.01 long-chain branches/1000 carbons and preferably 0.05 long-chain branches/1000 carbons. In general, substantially linear ethylene polymers contain less than or equal to 3 long-chain branches/1000 carbons and preferably less than or equal to 1 long-chain branch/1000 carbons.

Preferred substantially linear ethylene polymers are prepared by using metallocene based catalysts capable of readily polymerizing high molecular weight alpha-olefin copolymers under the process conditions. As used here, copolymer means a polymer of two or more intentionally added comonomers, for example, such as might be prepared by polymerizing ethylene with at least one other $C_3$ to $C_{20}$ comonomer. Preferred linear ethylene polymers may be prepared in a similar manner using, for instance, metallocene or vanadium based catalyst under conditions that do not permit polymerization of monomers other than those intentionally added to the reactor. Other basic characteristics of substantially linear ethylene polymers or linear ethylene polymers include a low residuals content (that is, a low concentration therein of the catalyst used to prepare the polymer, unreacted comonomers and low molecular weight oligomers made during the course of the polymerization), and a controlled molecular architecture which provides good processability even though the molecular weight distribution is narrow relative to conventional olefin polymers.

While the substantially linear ethylene polymers or the linear ethylene polymers used in the practice of this invention include substantially linear ethylene homopolymers or linear ethylene homopolymers, preferably the substantially linear ethylene polymers or the linear ethylene polymers comprise between 50 to 95 weight percent ethylene and 5 to 50, and preferably 10 to 25 weight percent of at least one alpha-olefin comonomer. The comonomer content in the substantially linear ethylene polymers or the linear ethylene polymers is generally calculated based on the amount added to the reactor and as can be measured using infrared spectroscopy according to ASTM D-2238, Method B. Typically, the substantially linear ethylene polymers or the linear ethylene polymers are copolymers of ethylene and one or more $C_3$ to $C_{20}$ alpha-olefins, preferably copolymers of ethylene and one or more $C_3$ to $C_{10}$, alpha-olefin comonomers and more preferably copolymers of ethylene and one or more comonomers selected from the group consisting of propylene, 1-butene, 1-hexene, 4-methyl-1-pentane, and 1-octene. Most preferably the copolymers are ethylene and 1-octene copolymers.

The density of these substantially linear ethylene polymers or linear ethylene polymers is equal to or greater than 0.850 grams per cubic centimeter ($g/cm^3$) and preferably equal to or greater than 0.860 $g/cm^3$. Generally, the density of these substantially linear ethylene polymers or linear ethylene polymers is less than or equal to 0.935 $g/cm^3$ and preferably less than or equal to 0.900 $g/cm^3$. The melt flow ratio for substantially linear ethylene polymers, measured as $I_{10}/I_2$, is greater than or equal to 5.63, is preferably from 6.5 to 15, and is more preferably from 7 to 10. $I_2$ is measured according to ASTM Designation D 1238 using conditions of 190°C and 2.16 kilogram ("kg") mass. $I_{10}$ is measured according to ASTM Designation D 1238 using conditions of 190°C and 10.0 kg mass.

The molecular weight distribution ($M_w/M_n$) for substantially linear ethylene polymers is the weight average molecular weight ($M_w$) divided by number average molecular weight ($M_n$). $M_w$ and $M_n$ are measured by gel permeation chromatography (GPC). For substantially linear ethylene polymers, the $I_{10}/I_2$ ratio indicates the degree of long-chain branching, that is, the larger the $I_{10}/I_2$ ratio, the more long-chain branching exists in the polymer. In preferred substantially linear ethylene polymers $M_w/M_n$ is related to $I_{10}/I_2$ by the equation: $M_w/M_n \leq (I_{10}/I_2) - 4.63$. Generally, $M_w/M_n$ for substantially linear ethylene polymers is at least 1.5 and preferably at least 2.0 and is less than or equal to 3.5, more preferably less than or equal to 3.0. In a most preferred embodiment, substantially linear ethylene polymers are also characterized by a single differential scanning calorimetry (DSC) melting peak.

The preferred $I_2$ melt index for these substantially linear ethylene polymers or linear ethylene polymers is from 0.01 g/10 min. to 100 g/10 min., and more preferably 0.1 g/10 min. to 10 g/10 min.

The polyolefin elastomer is employed in the blends of the present invention in amounts sufficient to provide the desired balance of processability and impact resistance. In general, the substantially linear ethylene polymer or linear ethylene polymer is employed in amounts of equal to or greater than 5 parts by weight, preferably equal to or greater than 10 parts by weight, more preferably equal to or greater than 15 parts by weight, and most preferably equal to or greater than 20 parts by weight based on the weight of the electrically-dissipative propylene composition. In general, the polyolefin elastomer is used in amounts less than or equal to 70 parts by weight, preferably less than or equal to 60 parts by weight, more preferably less than or equal to 50 parts by weight, even more preferably less than or equal to 35 parts by weight and most preferably less than or equal to 40 parts by weight based on the weight of the electrically-dissipative propylene composition.

Component (c) of the present invention is an electrically-conductive carbon. The term "electrically-conductive carbon" as used herein refers to electronically-conductive grades of carbon black, carbon fibers, graphite, or combination thereof. Suitable carbon fibers include agglomerates of fibers having an aspect ratio of at least five and a diameter in the range of 3.5 to 70 nanometers (nm) as described, for example, in WO 91/03057. Suitable graphite particles have a size in the range of 1 to 30 $\mu$m and a surface area in the range of 5 to 100 square meters per gram ($m^2/g$). Examples of suitable carbon blacks include particles of carbon having an average primary particle diameter of less than 125 nm, more preferably less than 60 nm. The carbon black is preferably utilized as an aggregate or agglomerate of primary particles, the aggregate or agglomerate typically having a size of 5 to 10 times the primary particle size. Larger agglomerates, beads, or pellets of carbon particles may also be utilized as a starting material in the preparation of the composition, so long as they disperse during the preparation or processing of the composition sufficiently to reach an average size in the cured composition of less than 10 μm, more preferably less than 5 μm, and most preferably less than 1.25 μm. The carbon black preferably has a nitrogen surface area of at least 125 m$^2$/g, more preferably at least 200 m$^2$/g. The nitrogen surface area of the carbon black may be determined using ASTM Method No. D 3037-93. The dibutyl phthalate absorption of the carbon is preferably at least 75 cubic centimeters per 100 grams (cc/100g), more preferably at least 100 cc/100 g, and may be measured according to ASTM Method No. D 2414-93. The electrically-conductive carbon is preferably employed in an amount, based on the weight of the composition, of equal to or greater than 0.1 parts by weight, more preferably equal to or greater than 0.5 parts by weight, even more preferably equal to or greater than 1 part by weight, more preferably equal to or greater than 5 parts by weight, and most preferably equal to or greater than 7 parts by weight. The electrically-conductive carbon is preferably employed in an amount equal to or less than 30 percent, more preferably equal to or less than 25 parts by weight, even more preferably equal to or less than 20 parts by weight, and most preferably equal to or less than 18 parts by weight. If desired, mixtures of electrically-conductive carbons with different properties may also be used. In one embodiment, carbon blacks having a nitrogen surface area of less than 500 m$^2$/g and a dibutyl phthalate absorption of less than 250 cc/100 g may be used in combination with carbon blacks having higher nitrogen surface areas and dibutyl phthalate absorption numbers.

Component (d) is an olefinic polymer. The olefinic polymer may be a polyethylene, such as high density polyethylene (HDPE), linear low density polyethylene (LLDPE), or ultra high density polyethylene (UHDPE), polyolefin elastomer (selected from the polyolefin elastomers described hereinabove with the proviso that it is a second polyolefin elastomer that is different from the first polyolefin elastomer component (b)), or combinations thereof. The olefinic polymer is employed in the present invention in amounts sufficient to provide the desired balance of processability, stiffness and impact resistance. Preferably, the olefinic polymer is compatible with the polyolefin elastomer and/or the rubber portion of the propylene block copolymer. In other words, the polyolefin elastomer and the olefinic polymer will comprise a distinct phase from the propylene polymer, block (a)(i), phase. The rubber portion, block (a)(ii), may be distributed in the propylene polymer phase, block (a)(i); the polyolefin elastomer phase; or both.

If present, the olefinic polymer is employed in amounts of equal to or greater than 1 part by weight, preferably equal to or greater than 2 parts by weight, and most preferably equal to or greater than 3 parts by weight based on the weight of the electrically-dissipative propylene composition. In general, the olefinic polymer is used in amounts less than or equal to 15 parts by weight, preferably less than or equal to 12 parts by weight, and most preferably less than or equal to 10 parts by weight based on the weight of the electrically-dissipative propylene composition.

Fillers which may be present in the composition include talc, wollastonite, clay, single layers of a cation exchanging layered silicate material, graphite, calcium carbonate, feldspar, nepheline, silica or glass, fumed silica, alumina, magnesium oxide, zinc oxide, barium sulfate, aluminum silicate, calcium silicate, titanium dioxide, titanates, glass microspheres or chalk. Of these fillers, talc, wollastonite, clay, calcium carbonate, silica/glass, alumina and titanium dioxide are preferred and talc is most preferred. Ignition-resistance fillers which can be used in the composition include antimony oxide; alumina trihydrate; magnesium hydroxide; borates; halogenated compounds, such as, but not limited to halogenated hydrocarbons, halogenated carbonate oligomers, halogenated diglycidyl ethers; organophosphorous compounds; fluorinated olefins; and metal salts of aromatic sulfur, or a mixture thereof may be used. Of these ignition-resistant fillers, alumina trihydrate and magnesium hydroxide are preferred. Other miscellaneous fillers include wood fibers/flours/chips, cotton, starch, glass fibers, synthetic fibers (for example, polyolefin fibers), and carbon fibers. In some cases, the addition of such non-conductive fillers have been discovered to increase the conductivity of the composition.

If used, such fillers may be present in an amount from at least 0.1 parts, preferably at least 1 parts, more preferably at least 2 parts, and most preferably at least 5 parts by weight based on the total weight of the composition. Generally, the filler is present in an amount less than or equal to 30 parts, preferably less than or equal to 25 parts, more preferably less than or equal to 20 parts, more preferably less than or equal to 15 parts, and most preferably less than or equal to 10 parts by weight based on the total weight of composition.

Further, the claimed electrically-dissipative propylene polymer compositions may also optionally contain one or more additives that are commonly used in propylene copolymer compositions. Preferred additives of this type include, but are not limited to: stabilizers, which stabilize polymer compositions against degradation caused by, but not limited to heat, light, and oxygen; colorants; antioxidants; antistats; flow enhancers; mold releases, such as metal stearates (for example, calcium stearate, magnesium stearate); nucleating agents, including clarifying agents; slip agents (for example, erucamide, oleamide, linoleamide, or steramide); or a mixture thereof may be used.

If used, such additives may be present in an amount from at least 0.01 parts, preferably at least 0.05 parts, more preferably at least 0.1 parts, more preferably at least 0.5 parts and most preferably at least 1 part by weight based on the total weight of the composition. Generally, the additive is present in an amount less than or equal to 10 parts, preferably less than or equal to 5 parts, more preferably less than or equal to 3 parts, more preferably less than or equal to 2 parts, and most preferably less than or equal to 1.5 parts by weight based on the total weight of composition.

The electrically-dissipative propylene polymer compositions of the present invention are thermoplastic and comprise at least two phases. A first phase comprises the propylene polymer portion, block (a)(i), and a second phase, comprises the polyolefin elastomer and optionally the olefinic polymer. In the present invention, preferably the second phase comprising the polyolefin elastomer is continuous. Preferably, the first and second phases are co-continuous. The rubber portion of the propylene block copolymer, block (a)(ii), may be distributed solely in the first phase, solely in the second phase, or partially in each phase. Preferably the rubber portion is distributed partially in the first and second phases.

In the composition of the present invention, the distribution of the electrically-conductive carbon between the first phase and second phase is not critical as long as the electrically-dissipative propylene composition is capable of dissipating an electrical charge, typically a surface resistivity of equal to or less than $10^{12}$ Ohms meets this requirement. However, it is preferable that the electrically-conductive carbon is dispersed in the second phase in an amount of equal to or greater than 50 percent, more preferably equal to or greater than 60 percent, even more preferably equal to or greater than 80 percent, even more preferably equal to or greater than 90 percent, and most preferably 100 percent of the electrically-conductive carbon is dispersed within the second phase.

The electrically-dissipative propylene polymer composition of the present invention may be prepared by any convenient method, including dry blending the individual components and subsequently melt mixing, either (1) by pre-melt mixing in a separate mixer (for example, a Banbury mixer), (2) directly in a single- or twin-screw extruder used to make pellets, sheet or profile of the composition, or (3) in an extruder capable of forming the finished article (for example, the automotive part) such as an injection molding machine or an extrusion blow molding machine. Pre-melt mixing of the components may be carried out, for example, by wet-blending or dry-blending pellets or powders of the polymers and the electrically-conductive carbon, which may then optionally be mixed further in a roll kneader at elevated temperatures. In another embodiment, solutions of the polymer(s) may be blended with the electrically-conductive carbon in a liquid medium. The amount of electrically-conductive carbon which becomes dispersed in the elastomeric phase is influenced by several factors, including the relative surface free energies of the components, the relative viscosities of the polymers present; and the mixing configuration and duration. The process for preparing the composition and the relative amounts of components may also affect the low temperature impact strength of the composition. The composition and the method for its preparation are preferably optimized experimentally to achieve the best combination of conductivity and physical properties, depending on the structural application for which the composition is to be used.

There are many types of molding operations which can be used to form useful fabricated articles or parts from the electrically-dissipative propylene polymer compositions disclosed herein, including various injection molding processes (for example, as described in Modern Plastics Encyclopedia/89, Mid October 1988 Issue, Vol. 65, No. 11, pp. 264-268, "Introduction to Injection Molding" and on pp. 270-271; "Injection Molding Thermoplastics") and blow molding processes (for example, as described in Modern Plastics Encyclopedia/89, Mid October 1988 Issue, Vol. 65, No. 11, pp. 217-218, "Extrusion-Blow Molding") and profile extrusion. Examples of fabricated articles include automotive parts such as bumpers, fascia, wheel covers, doors, instrument panels, trim, cladding, rocker panels, grills, as well as other household and personal articles, including, for example, freezer containers.

The composition preferably has a resistivity of equal to or less than $10^{12}$ Ohms, more preferably equal to or less than $10^5$ Ohms, and even more preferably equal to or less than 10 Ohms. The term "resistivity" as used herein refers to the surface resistivity of the composition in solid form, as may be measured according to the procedure set forth in the following examples.

Once fabricated, the electronically-conductive article can be painted or coated on at least one of its surfaces using any suitable electromotive coating process. The term "electromotive coating process" as used herein refers to any coating process wherein an electrical potential exists between the substrate being coated and the coating material. Examples of electromotive coating processes include electrostatic coating of liquids or powders, electrodeposition ("E-Coat") processes, electromotive vapor deposition, and electroplating processes. The article may be painted or coated with any suitable water-based or organic-based composition (or water/organic mixture), including conductive primer compositions which further enhance the electronic conductivity of the article, or with a solventless composition by a powder coating or vapor deposition method.

Unless indicated otherwise, the following terms and testing procedures referred to herein are defined as follows:

Density is measured in accordance with ASTM D-792. The samples are annealed at ambient conditions for 24 hours before the measurement is taken.

Molecular weight is determined using gel permeation chromatography (GPC) on a Waters 150°C high temperature chromatographic unit equipped with three mixed porosity columns (Polymer Laboratories 103, 104, 105, and 106), operating at a system temperature of 140°C. The solvent is 1,2,4-trichlorobenzene, from which 0.3 percent by weight solutions of the samples are prepared for injection. The flow rate is 1.0 milliliter per minute (ml/min) and the injection size is 100 microliters.

Molecular weights are determined by gel permeation chromatography (GPC) on a Polymer Laboratories PL-GPC-220 high temperature chromatographic unit equipped with three linear mixed bed columns, 300 x 7.5 mm (Polymer Laboratories PLgel Mixed B (10-micron particle size)). The oven temperature is at 160°C with the autosampler hot zone at 160°C and the warm zone at 145°C. The solvent is 1,2,4-trichlorobenzene containing 200 ppm 2,6-di-t-butyl-4-methylphenol. The flow rate is 1.0 milliliter/minute and the injection size is 100 microliters. A 0.15 percent by weight solution of the sample is prepared for injection by dissolving the sample in nitrogen purged 1,2,4-trichlorobenzene containing 200 ppm 2,6-di-t-butyl-4-methylphenol for 2.5 hrs at 160°C with gentle mixing.

The molecular weight determination is deduced by using ten narrow molecular weight distribution polystyrene standards (from Polymer Laboratories, EasiCal PS1 ranging from 580 - 7,500,000 g/mole) in conjunction with their elution volumes. The equivalent polypropylene molecular weights are determined by using appropriate Mark-Houwink coefficients for polypropylene (as described by Th.G. Scholte, N.L.J. Meijerink, H.M. Schoffeleers, and A.M.G. Brands, J. Appl. Polym. Sci., 29, 3763 - 3782 (1984)) and polystyrene (as described by E. P. Otocka, R. J. Roe, N. Y. Hellman, P. M. Muglia, Macromolecules, 4, 507 (1971)) in the Mark-Houwink equation:

$$\{\eta\} = KM^a$$

where $K_{pp}$ = 1.90E-04, $a_{pp}$ = 0.725 and $K_{ps}$=1.26E-04, $a_{ps}$=0.702.

Rubber particle size is determined as follows:

1. Sample Preparation. Injection molded bars are examined near the center of the bars so that sections could be cut parallel to the injection molding direction at skin and core (about 1500 microns below the outer surface). Sample block faces are razor trimmed and cryopolished prior to staining. The cryopolished blocks are prestained with $RuO_4$ vapors for 3 hours at ambient temperature. The staining solution is prepared by weighing 0.2 grams of ruthenium (III) chloride hydrate ($RuCl_3$ x $H_2O$) into a glass bottle with a screw lid and adding 10 millimeters (ml) of 5.25 percent aqueous sodium hypochlorite to the jar. The samples are placed in the glass jar using a glass slide having double sided tape. The slide is placed in the bottle in order to suspend the blocks about 1 inch (25.4 mm) above the staining solution.

The blocks are exposed to the vapor phase of the staining solution for 3 hours at ambient temperature. Sections of approximately 100 nanometers in thickness are collected at ambient temperature using a diamond knife on a Leica UCT microtome. Sections are placed on 400 mesh virgin TEM grids for observation.

2. Technique. Bright field transmission electron micrograph (TEM) images are captured on Polaroid SO-163 film using a Hitachi H-8100 operated at 100 kilovolt (kV) accelerating voltage

3. Image Analysis. Image analysis is performed using Leica Qwin Pro V2.4 software on three 15kX TEM images. The magnification selected for image analysis depends on the number and size of particles to be analyzed. 579 features are measured from the three images. In order to allow for binary image generation, manual tracing of the rubber particles from the TEM prints is carried out using an extra fine point black Sharpie marker. The traced TEM images are scanned using a Hewlett Packard Scan Jet 4c to generate digital images. The digital images are imported into the Leica Qwin Pro V2.4 program and converted to binary images by setting a gray-level threshold to included the features of interest Once the binary images are achieved, other parameters are used to edit images prior to image analysis. Some of these features included removing edge features, accepting or excluded features and manually cutting features that required separation. Once the particles in the images are measured, the sizing data was exported into an Excel spreadsheet that is used to create bin ranges for the rubber particles. The sizing data is placed into appropriate bin ranges and a histogram of particle lengths (maximum particle distance) versus percent frequency is generated. Parameters that are calculated are minimum, maximum, average particle size and standard deviation of the rubber particles. Values reported are the percent rubber particles having a particle size less than 0.6 $\mu$m.

The following examples illustrate the invention. Unless otherwise stated, all amounts are parts by weight based on the weight of the electrically-dissipative propylene polymer compositions.

EXAMPLES

Examples 1 and 2 and Comparative Example A were blended in a Haake Rheocord 90 torque rheometer equipped with a 200 cubic centimeter (cc) mixing bowl, with the mixing speed set for 75 revolutions per minute (rpm). The polymers (propylene block copolymer, polyolefin elastomer and olefinic polymer) were dry blended then heated and kneaded in the mixing bowl at 185°C for approximately 4 minutes. This time was determined by monitoring the torque of the mixer, when the pellets of polymer were initially added, the torque was high, in the range of 45 Newton meters (Nm). Once the polymers were sufficiently melted, the torque approached the 5 Nm range. This was when the components (for example, electrically-conductive carbon, filler, stabilizers, etc.) were added. Typically the components were added by spatula over 1 to 1.5 minutes. Following the addition of the components, the torque rose. The resulting propylene polymer composition was allowed to blend for approximately 10 minutes. When the torque dropped significantly, mixing was complete.

The electrically-dissipative propylene polymer composition was removed from the Haake blender and placed into a glass baking dish. The polymeric blend was drenched with liquid nitrogen for approximately 5 minutes. The frozen material was placed directly into a Thomas Wiley Model 4 Polymer Grinding Mill, and grounded into small chips. The chips were supplied to a 28 ton Arburg injection-molding machine for injection molding into tensile bar test specimens. The following molding conditions were used: barrel temperature: 400°F (204°C), mold temperature: 125°F (52°C), and injection time: 1.5 seconds.

The compositions of Examples 1 and 2 and Comparative Example A are shown in Table 1, amounts are in parts by weight based on the total weight of the propylene polymer composition. In Table 1:

"PP-1" is a propylene block copolymer comprising 7.3 percent EP rubber having a MFR of 65 g/10min. and a rubber $M_z$ of about 2,185,000;

"PP-2" available as C705-44NAHP Polypropylene from The Dow Chemical Company is a propylene block copolymer having a MFR of 44 g/10 min. it comprises 16.5 percent EP rubber with a rubber $M_z$ of about 637,700;

"EDPM" is a low diene content ethylene, propylene, diene rubber with a 45 Mooney Viscosity (ML 1+4at 125°C, ASTM D1646) available as NORDEL™ 3745P from DuPont Dow Elastomers;

"S/LEP" is a substantially linear ethylene-octene copolymer having a MI of 5 g/10 min. (determined at 190°C and an applied load of 2.16 kg) and a density of 0.870 grams per cubic centimeter (g/cc) available as ENGAGE™ EG 8200 Polyolefin Elastomer from DuPont Dow Elastomers;

"HDPE" is a commercially available high density polyethylene having a MI = 60 g/10 min. (determined at 190°C and an applied load of 2.16 kg) available from The Dow Chemical Company as IP-60 HDPE;

"Carbon Black" is a carbon black available as XC-72 from Cabot;

"Talc" is a commercially available talc with an average particle size of 1.8 μm available from Luzannec under the tradename JETFIL™ 700C;

"B225" is a 1:1 mixture of 3,5-bis(1,1-dimethylethyl)-4-hydroxy-2,2-bis[3-[3,5-bis(1,1-dimethylethyl)-4-hydroxyphenyl]oxo-propoxy]methyl-1,3-propanediyl ester and tris(2,4-di-tert-butylphenyl) phosphite antioxidant available from Ciba Geigy under the tradename IRGANOX™ B225; and

"Calcium Stearate" is available from Whitco.

The following tests are performed on Examples 1 and 2 and Comparative Example A and the results of these tests are shown in Table 1:

"MFR" is melt flow rate determined according to ASTM D 1238 at 230°C and an applied load of 2.16 kg, values are reported in grams per 10 minutes (g/10 min.);

"Flexural Modulus" is determined according to ASTM D 790, values are reported in pounds per square inch (psi) and megapascals (MPa);

"Notched Izod" is determined according to ASTM D 256A at 32°F (0°C), values are reported in foot pounds per inch (ft-lb/in) and Joule per meter (J/M);

"Density" is measured according to ASTM D 792, values are reported in grams per cubic centimeter (g/cc);

"Delta Gloss" is determined on injection molded tensile bars using a Tobins Associates Model MTI Mottle Tester. The samples are taped onto the rotor and the detector traversed the sample collecting continuous data. Data is recorded at each peak and valley of signal intensity. The mottle data is converted into gloss data using the standards provided with the gloss measurement probe. Delta gloss is then obtained by subtracting adjacent gloss values and selecting the maximum for each sample; and

"Resistivity" is surface resistivity measured according to Cabot Surface Resistivity Test Method (CMT) EO42, based on the norm IEC 167 using an ITW Ransberg 76634-00 conductivity meter. Surface resistivity (SR) is calculated, taking into consideration the geometry of the electrodes, with the following equation:

$$SR = R*L/g$$

where:

R is the resistance of the material to the flow of charge (Ohm);
L is the length of the electrode (cm); and
g is the distance between the electrodes (cm).

Table 1

| EXAMPLE | 1 | 2 | |
|---|---|---|---|
| COMPARATIVE EXAMPLE | | | A |
| COMPOSITION | | | |
| PP-1 | 48.75 | 48.75 | |
| PP-2 | | | 48.75 |
| EPDM | | 24 | |
| S/LEP | 24 | | 24 |
| HDPE | 6 | 6 | 6 |
| Carbon Black | 14 | 14 | 14 |
| Talc | 7 | 7 | 7 |
| B225 | 0.2 | 0.2 | 0.2 |
| Calcium Stearate | 0.05 | 0.05 | 0.05 |
| PROPERTIES | | | |
| Resistivity, Ohms | 0.2 | 2 | 0.2 |
| Delta Gloss, Maximum | 2.7 | 3.5 | 14.8 |
| Flexural Modulus, $10^5$ psi (MPa) | 1.4 (965) | 1.4 (965) | 1.2 (827) |
| Notched Izod, ft lb/in (J/M) | 13.1 (700) | 18.6 (993) | 16.9 (902) |
| MFR, g/10 min. | 6.2 | 2.3 | 7.4 |
| Density, g/cc | 1.018 | 1.016 | 1.017 |
| Rubber Particle Size, percent less than 0.6 $\mu$m | 90 | 90 | |

As can be seen, the electrically-dissipative propylene composition of the present invention demonstrate a good balance of improved flow marks (as measured by delta gloss), resistivity and a good balance of flow, stiffness and toughness.

**Claims**

1.    An electrically-dissipative propylene polymer composition comprising:

(a) a propylene block copolymer comprising

(i) a first block comprising a propylene polymer portion and
(ii) a second block comprising a rubber portion comprising a propylene copolymer having a $M_z$ equal to or greater than about 1,000,000;

(b) a polyolefin elastomer;
(c) an electrically-conductive carbon;
(d) optionally, an olefinic polymer;
and
(e) optionally, a filler.

2.    The electrically-dissipative propylene polymer composition of Claim 1 wherein the propylene block copolymer comprises an ethylene and propylene rubber.

3.    The electrically-dissipative propylene polymer composition of Claim 1 wherein the polyolefin elastomer is a substantially linear ethylene polymer, a linear ethylene polymer, or combinations thereof where in the substantially linear ethylene polymer and/or linear ethylene polymer are **characterized** as having:

(i) a density equal to or less than about 0.93 $g/cm^3$;
(ii) a molecular weight distribution, $M_n/M_w$, of equal to or less than about 3.0, and
(iii) a Composition Distribution Branch Index equal to or greater than about 30 percent.

4. The electrically-dissipative propylene polymer composition of Claim 1 wherein the electrically-conductive carbon is present in an amount sufficient to provide a surface resistivity of equal to or less than $10^{12}$ Ohms.

5. The electrically-dissipative propylene polymer composition of Claim 1 wherein the electrically-conductive carbon is carbon black, carbon fibers, graphite or combinations thereof.

6. The electrically-dissipative propylene polymer composition of Claim 1 further comprising one or more additives selected from the group consisting of a heat stabilizer, a light stabilizer, a oxidation stabilizer, a colorant, an antioxidant, an antistat, a flow enhancer, a mold release, a nucleating agent, a clarifying agent, and a slip agent.

7. The electrically-dissipative propylene polymer composition of Claim 6 wherein the mold release is calcium stearate, magnesium stearate, or a combination thereof.

8. The electrically-dissipative propylene polymer composition of Claim 6 wherein the slip agent is erucamide, oleamide, linoleamide, steramide, or combinations thereof.

9. The electrically-dissipative propylene polymer composition of Claim 1 wherein:

(a) the propylene block copolymer is present in an amount of from 30 to 90 parts by weight,
(b) the polyolefin elastomer is present in an amount of from 5 to 70 parts by weight,
(c) the electrically-conductive carbon is present in an amount of from 0.1 to 30 parts by weight,
(d) the olefinic polymer is present in an amount of from 0 to 15 parts by weight, and
(e) the filler is present in an amount of from 0 to 30 parts by weight,

wherein parts by weight are based on the total weight of the electronically-dissipative propylene polymer composition.

10. The electrically-dissipative propylene polymer composition of Claim 9 wherein:

(d) the olefinic polymer is present in an amount of from 1 part by weight to 15 parts by weight and is selected from the group consisting of HDPE, LLDPE, UHDPE, a polyolefin elastomer, and combinations thereof

wherein parts by weight are based on the total weight of the electronically-dissipative propylene polymer composition.

11. The electrically-dissipative propylene polymer composition of Claim 9 wherein:

(e) the filler is present in an amount of from 0.1 part by weight to 30 parts by weight and is selected from the group consisting of talc, wollastonite, clay, single layers of a cation exchanging layered silicate material, graphite, calcium carbonate, feldspar, nepheline, silica, glass, fumed silica, alumina, magnesium oxide, zinc oxide, barium sulfate, aluminum silicate, calcium silicate, titanium dioxide, titanates, glass microspheres and chalk,

wherein parts by weight are based on the total weight of the electrically-dissipative propylene polymer composition.

12. A process of extruding or molding the electronically-dissipative propylene polymer composition of Claim 1 into a fabricated article.

13. The electronically-dissipative propylene polymer composition according to Claim 1 in the form of a fabricated article.

14. The electronically-dissipative propylene polymer composition according to Claim 1 in the form of an automotive part selected from the group consisting of a bumper, a fascia, a wheel cover, a door, an instrument panel, a trim, a cladding, a rocker panel, and a grill.

**Patentansprüche**

1. Elektrisch-dissipative Propylen-Polymer-Zusammensetzung umfassend:

    (a) ein Propylen-Blockcopolymer umfassend

    (i) einen ersten Block, der einen Propylenpolymeranteil umfasst und
    (ii) einen zweiten Block, der einen Gummianteil umfasst, welcher ein Propylencopolymer umfasst, das eine $M_z$ gleich oder größer als etwa 1.000.000 hat;

    (b) ein Polyolefinelastomer ;
    (c) einen elektrisch-leitfähigen Kohlenstoff;
    (d) gegebenenfalls ein Olefinpolymer;
    und
    (e) gegebenenfalls einen Füllstoff.

2. Elektrisch-dissipative Propylen-Polymer-Zusammensetzung nach Anspruch 1, wobei das Propylen-Blockcopolymer einen Ethylen- und Propylengummi umfasst.

3. Elektrisch-dissipative Propylen-Polymer-Zusammensetzung nach Anspruch 1, wobei das Polyolefinelastomer ein im Wesentlichen lineares Ethylenpolymer ist, ein lineares Ethylenpolymer oder Kombinationen davon, wobei das im Wesentlichen lineare Ethylenpolymer und/oder lineare Ethylenpolymer **dadurch gekennzeichnet ist, dass** es:

    (i) eine Dichte gleich oder kleiner als etwa 0,93 g/cm$^3$;
    (ii) eine Molekulargewichtsverteilung, $M_n/M_w$ von gleich oder kleiner als etwa 3,0, und
    (iii) einen Zusammensetzungsverteilungsverzweigungs-Index (Composition Distribution Branch Index) gleich oder größer als etwa 30 Prozent

    hat.

4. Elektrisch-dissipative Propylen-Polymer-Zusammensetzung nach Anspruch 1, wobei der elektrisch-leitfähige Kohlenstoff in einer Menge vorhanden ist, die ausreichend ist, um einen Oberflächenwiderstand von gleich oder kleiner als 10$^{12}$ Ohm zu gewährleisten.

5. Elektrisch-dissipative Propylen-Polymer-Zusammensetzung nach Anspruch 1, wobei der elektrisch-leitfähige Kohlenstoff Ruß ist, Carbonfasern, Graphit oder Kombinationen davon.

6. Elektrisch-dissipative Propylen-Polymer-Zusammensetzung nach Anspruch 1, die weiterhin einen oder mehrere Zusatzstoff(e) umfasst, die aus der Gruppe ausgewählt sind, die aus einem Hitzestabilisator, einem Lichtstabilisator, einem Oxidafionsstabilisator, einem Farbstoff, einem Antioxidationsmittel, einem Antistatikum, einem Fließmittel, einem Trennmittel, einem Nukleirungsmittel, einem Klärhilfsmittel und einem Gleitmittel besteht.

7. Elektrisch-dissipative Propylen-Polymer-Zusammensetzung nach Anspruch 6, wobei das Trennmittel Calciumstearat, Magnesiumstearat oder eine Kombination davon ist.

8. Elektrisch-dissipative Propylen-Polymer-Zusammensetzung nach Anspruch 6, wobei das Gleitmittel Erucamid, Oleamid, Linoleamid, Steramid ist oder Kombinationen davon.

9. Elektrisch-dissipative Propylen-Polymer-Zusammensetzung nach Anspruch 1, wobei:

    (a) das Propylen-Blockcopolymer in einer Menge von 30 bis 90 Gewichtsteilen vorhanden ist,
    (b) das Polyolefinelastomer in einer Menge von 5 bis 70 Gewichtsteilen vorhanden ist,
    (c) der elektrisch-leitfähige Kohlenstoff in einer Menge von 0,1 bis 30 Gewichtsteilen vorhanden ist,
    (d) das Olefinpolymer in einer Menge von 0 bis 15 Gewichtsteilen vorhanden ist, und
    (e) der Füllstoff in einer Menge von 0 bis 30 Gewichststeilen vorhanden ist,

    wobei die Gewichtsteile auf das Gesamtgewicht der elektrisch-dissipativen Propylen-Polymer-Zusammensetzung bezogen sind.

**10.** Elektrisch-dissipative Propylen-Polymer-Zusammensetzung nach Anspruch 9, wobei:

(d) das Olefinpolymer in einer Menge von 1 Gewichtsteil bis 15 Gewichtsteilen vorhanden ist und aus der Gruppe ausgewählt ist, die aus HDPE, LLDPE, UHDPE, einem Polyolefinelastomer und Kombinationen davon besteht,

wobei die Gewichtsteile auf das Gesamtgewicht der elektrisch-dissipativen Propylen-Polymer-Zusammensetzung bezogen sind.

**11.** Elektrisch-dissipative Propylen-Polymer-Zusammensetzung nach Anspruch 9, wobei:

(e) der Füllstoff in einer Menge von 0,1 Gewichtsteilen bis 30 Gewichtsteilen vorhanden ist und aus der Gruppe ausgewählt ist, die aus Talk, Wollastonit, Lehm, einzelnen Schichten eines kationenausgetauschten Schichtsilikatmaterials, Graphit, Calciumcarbonat, Feldspat, Nephelin, Kieselerde, Glas, pyrogener Kieselsäure, Aluminiumoxid, Magnesiumoxid, Zinkoxid, Bariumsulfat, Aluminiumsilikat, Calciumsilikat, Titandioxid, Titanaten, Glasmikrosphären und Kalk besteht,

wobei die Gewichtsteile auf das Gesamtgewicht der elektrisch-dissipativen Propylen-Polymer-Zusammensetzung bezogen sind.

**12.** Verfahren, zum Extrudieren oder Formen der elektrisch-dissipativen Propylen-Polymer-Zusammensetzung nach Anspruch 1 zu einem fertigen Gegenstand.

**13.** Elektrisch-dissipative Propylen-Polymer-Zusammensetzung nach Anspruch 1 in Form eines fertigen Gegenstands.

**14.** Elektrisch-dissipative Propylen-Polymer-Zusammensetzung nach Anspruch 1 in Form eines Fahrzeugteils, das aus der Gruppe ausgewählt ist, die aus einer Stoßstange, einem Armaturenbrett, einer Radkappe, einer Tür, einer Armaturentafel, einer Zierleiste, einer Verkleidung, eines Schwellers und einem Grill besteht.

**Revendications**

**1.** Composition de polymère de propylène électro-dissipative, comprenant :

a) un copolymère de propylène à blocs, comportant

i) un premier bloc comprenant une partie polymère de propylène,
ii) et un deuxième bloc comprenant une partie caoutchouc comprenant un copolymère de propylène présentant une masse molaire $M_z$ supérieure ou égale à environ 1 000 000 ;

b) un élastomère de type polyoléfine ;
c) un carbone électro-conducteur ;
d) en option, un polymère de type polyoléfine ;
e) et en option, une charge.

**2.** Composition de polymère de propylène électro-dissipative, conforme à la revendication 1, dans laquelle le copolymère de propylène à blocs comprend un caoutchouc d'éthylène et de propylène.

**3.** Composition de polymère de propylène électro-dissipative, conforme à la revendication 1, dans laquelle l'élastomère de type polyoléfine est un polymère d'éthylène sensiblement linéaire, un polymère d'éthylène linéaire, ou une combinaison de tels polymères, lequel polymère d'éthylène sensiblement linéaire et/ou lequel polymère d'éthylène linéaire se caractérisent en ce qu'il(s) présente(nt) :

i) une masse volumique inférieure ou égale à environ 0,93 g/cm$^3$ ;
ii) un indice de distribution des masses moléculaires $M_n/M_w$ inférieur ou égal à environ 3,0 ;
iii) et un indice CDBI supérieur ou égal à environ 30 %.

**4.** Composition de polymère de propylène électro-dissipative, conforme à la revendication 1, dans laquelle le carbone électro-conducteur se trouve en une quantité suffisante pour donner une résistivité surfacique inférieure ou égale

à $10^{12}$ ohms.

5. Composition de polymère de propylène électro-dissipative, conforme à la revendication 1, dans laquelle le carbone électro-conducteur est un noir de carbone, des fibres de carbone, un graphite, ou une combinaison de ces carbones.

6. Composition de polymère de propylène électro-dissipative, conforme à la revendication 1, qui comprend en outre un ou plusieurs adjuvant(s) choisi(s) dans l'ensemble formé par un agent thermostabilisant, un agent photostabilisant, un agent stabilisant vis-à-vis de l'oxydation, un colorant, un anti-oxydant, un agent anti-statique, un agent améliorant l'écoulement, un agent de démoulage, un agent de nucléation, un agent clarifiant, et un agent de glissement.

7. Composition de polymère de propylène électro-dissipative, conforme à la revendication 6, dans laquelle l'agent de démoulage est du stéarate de calcium, du stéarate de magnésium, ou une combinaison de ceux-ci.

8. Composition de polymère de propylène électro-dissipative, conforme à la revendication 6, dans laquelle l'agent de glissement est de l'érucamide, de l'oléamide, du linoléamide, du stéaramide, ou une combinaison de ceux-ci.

9. Composition de polymère de propylène électro-dissipative, conforme à la revendication 1, dans laquelle

   a) le copolymère de propylène à blocs se trouve en une quantité de 30 à 90 parties en poids ;
   b) l'élastomère de type polyoléfine se trouve en une quantité de 5 à 70 parties en poids ;
   c) le carbone électro-conducteur se trouve en une quantité de 0,1 à 30 parties en poids ;
   d) le polymère de type polyoléfine se trouve en une quantité de 0 à 15 parties en poids ;
   e) et la charge se trouve en une quantité de 0 à 30 parties en poids ; étant entendu que ces parties en poids se rapportent au poids total de la composition de polymère de propylène électro-dissipative.

10. Composition de polymère de propylène électro-dissipative, conforme à la revendication 9, dans laquelle

    d) il y a un polymère de type polyoléfine, présent en une quantité de 1 à 15 parties en poids et choisi dans l'ensemble formé par les suivants : PEhd, PEbdl, PEuhd, élastomères de type polyoléfine, et leurs combinaisons ;

    étant entendu que ces parties en poids se rapportent au poids total de la composition de polymère de propylène électro-dissipative.

11. Composition de polymère de propylène électro-dissipative, conforme à la revendication 9, dans laquelle

    e) il y a une charge, présente en une quantité de 0,1 à 30 parties en poids et choisie dans l'ensemble formé par les suivantes : talc, wollastonite, argile, monocouches de matériau de type silicate à structure en couches et échangeur de cations, graphite, carbonate de calcium, feldspath, néphélite, silice, verre, silice de pyrohydrolyse, alumine, oxyde de magnésium, oxyde de zinc, sulfate de baryum, silicate d'aluminium, silicate de calcium, dioxyde de titane, titanates, microsphères de verre, et craie ;

    étant entendu que ces parties en poids se rapportent au poids total de la composition de polymère de propylène électro-dissipative.

12. Procédé d'extrusion ou de moulage d'une composition de polymère de propylène électro-dissipative, conforme à la revendication 1, en un article de fabrication.

13. Composition de polymère de propylène électro-dissipative, conforme à la revendication 1, sous forme d'un article de fabrication.

14. Composition de polymère de propylène électro-dissipative, conforme à la revendication 1, sous forme d'une pièce d'automobile choisie parmi un pare-chocs, une planche de bord, un enjoliveur de roue, une porte, un tableau de bord, une garniture, un parement, un bas de caisse, et une calandre.

**EP 1 716 579 B1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US P5484838 A
- US P5844037 A
- US P5468808 A
- US P5272236 A
- US P5278272 A
- US P3645992 A
- US P4937299 A
- US P4701432 A
- US P4937301 A
- US P4935397 A
- US P5055438 A
- EP 129368 A
- EP 260999 A
- WO 9007526 A
- US P4798081 A
- WO 9103057 A

**Non-patent literature cited in the description**

- **WILD.** Journal of Polymer Science, Polymer Physics. 1982, vol. 20, 441
- *Modern Plastics Encyclopedia/89,* October 1988, vol. 65 (11), 264-268
- Introduction to Injection Molding. *Injection Molding Thermoplastics,* 270-271
- Extrusion-Blow Molding. Modern Plastics Encyclopedia/89. October 1988, vol. 65, 217-218
- **TH.G. SCHOLTE ; N.L.J. MEIJERINK ; H.M. SCHOFFELEERS ; A.M.G. BRANDS.** *J. Appl. Polym. Sci.,* 1984, vol. 29, 3763-3782
- **E. P. OTOCKA ; R. J. ROE ; N. Y. HELLMAN ; P. M. MUGLIA.** *Macromolecules,* 1971, vol. 4, 507